# EUROPEAN PATENT SPECIFICATION

(11) **EP 3 246 564 B1**
(45) Date of publication and mention of the grant of the patent: **06.03.2019**
(21) Application number: 17160578.5
(22) Date of filing: 13.03.2017
(51) Int. Cl.: F03D 80/50

(54) **Suspended load lifting and lowering device and suspended load lifting and lowering method for wind turbine power generation apparatus**
Hub- und Absenkvorrichtung für hängende Lasten und Hub- und Absenkeverfahren für hängende Lasten für eine Windturbine
Dispositif de levage et d'abaissement de charge suspendue et procédé de levage et d'abaissement pour une éolienne

(30) Priority: 20.05.2016 JP 2016101030
(43) Date of publication of application: 22.11.2017
(73) Proprietor: Mitsubishi Heavy Industries, Ltd., Tokyo 108-8215 (JP)
(72) Inventor: TEZUKA, Norikazu, Tokyo, 108-8215 (JP); SAKAUE, Tatsuya, Tokyo, 108-8215 (JP); TAKAYANAGI, Kazufumi, Tokyo, 108-8215 (JP); OBASE, Yasuhiro, Tokyo, 108-8215 (JP)
(74) Representative: Henkel, Breuer & Partner

(56) References cited:
- EP-A1- 2 368 834
- EP-A1- 2 522 616
- JP-A- 2014 208 989
- US-A- 5 452 774
- US-B1- 6 278 198

## Description

### TECHNICAL FIELD

The present disclosure relates to a suspended load lifting and lowering device and a suspended load lifting and lowering method for a wind turbine power generation apparatus.

### BACKGROUND ART

Maintenance for a wind turbine power generation apparatus may involve, for instance, lifting and lowering a component suspended from an upper portion of a tower of the wind turbine power generation apparatus, or from a nacelle, a hub, or the like provided on the upper side of the tower. When the suspended load such as a component is lifted and lowered while being suspended from a height, the suspended load might be affected by wind or the like to swing. The swinging suspended load might collide with the tower, and thus the suspended load or the tower might be damaged.

In JP 2014-208989 A, a swing preventing device is used for preventing the suspended load from swinging as described above. The swing preventing device includes a frame disposed between the suspended load and the tower. The frame is engaged with a guide rail attached to an outer circumferential surface of the tower via an engagement part. A winch is attached to the frame. By adjusting the amount of a wire wound by the winch, the position of the frame in the upper and lower direction can be adjusted. The suspended load suspended from the height is surrounded by the frame, and the frame is moved along the guide rail in the upper and lower direction in accordance with the movement of the suspended load lifted and lowered by a lifting and lowering device.

The US 6278198 B1 discloses a carriage for a wind turbine assembly including a tower. The carriage can be moved along a vertical direction of the tower while being guided by guide rails and includes a platform on which a load can be secured. The carriage is connected to a lifting and lowering mechanism including a cable and a winch. When the winch is operated the carriage supporting the load is lifted or lowered along the vertical direction of the tower.

The EP 2368834 A1 discloses an equipment for raising/lowering of loads to/from a top of a support tower. The equipment comprises a platform configured to move in a vertical direction of the tower along installation guides in a self-propelled manner. On the platform the load that is to be transferred can be placed.

The US 5452774 A discloses an apparatus for moving loads or lift baskets up and down a structure. The apparatus includes drives engaged with a rail mounted on the structure, wherein when the drives are operated the apparatus moves in a vertical direction of the structure in a self-propelled manner. Thus the loads or the lift baskets mounted on the drives can be transferred in the vertical direction.

The EP 2522616 A1 discloses an elevator apparatus including an elevator cage, a guiding means for guiding the elevator cage along a ladder and a drive belt configured to be engaged with a rung of the ladder. Further the apparatus includes a motor mounted on the elevator cage and configured to drive the drive belt such that the elevator cage moves along the ladder.

### SUMMARY

With the swing preventing device described in JP 2014-208989 A, the suspended load is surrounded by the frame disposed between the suspended load and the tower, and is lifted and lowered in accordance with the movement of the frame along the tower. Thus, the suspended load can be prevented from swinging due to wind or the like.

A simpler configuration for preventing the suspended load being lifted and lowered from swinging has been called for.

In view of the above, an object of at least one embodiment of the present invention is to provide a suspended load lifting and lowering device and a suspended load lifting and lowering method, for a wind turbine power generation apparatus, capable of preventing a suspended load being lifted and lowered from swinging.
(1) A suspended load lifting and lowering device for a wind turbine power generation apparatus according to at least one embodiment of the present invention includes the features of claim 1. The suspended load lifting and lowering device includes:
   a lifting and lowering mechanism for lifting and lowering a suspended load;
   a suspended load carriage on which the suspended load suspended by the lifting and lowering mechanism is fixed, the suspended load carriage being configured to be movable along a tower of the wind turbine generation apparatus; and
   a guide rail attached to the tower, the guide rail guiding the suspended load carriage in such a manner that the suspended load carriage moves up and down along the tower.

The suspended load carriage is configured to be lifted and lowered together with the suspended load by the lifting and lowering mechanism.

In the configuration (1), the suspended load carriage on which the suspended load is fixed moves upward and downward along the tower while being guided by the guide rail attached to the tower. Thus, when the suspended load is lifted and lowered by the lifting and lowering mechanism, the suspended load moves upward and downward along the tower together with the suspended load carriage. Thus, the suspended load can be prevented from swinging. The suspended load carriage is lifted and lowered by the lifting and lowering mechanism together with the suspended load fixed on the suspended load carriage. Thus, a lifting and lowering mechanism for lifting and lowering the suspended load carriage needs not to be provided in addition to the lifting and lowering mechanism for lifting and lowering the suspended load. All things considered, in the configuration (1), the suspended load can be prevented from swinging, while being lifted and lowered, with a simple configuration.
(2) In some embodiments, in the configuration (1),
   the tower includes a plurality of tower sections coupled to each other, and
   the guide rail is disposed while being separated from an outer circumferential surface of the tower so as not to come into contact with a flange portion which is a coupling portion for the tower sections.

In the configuration (2), the guide rail that guides the suspended load carriage is disposed while being separated from an outer circumferential surface of the tower so as not to come into contact with a flange portion which is a coupling portion for the tower sections, whereby the guide rail can be continuously disposed in a section above the flange and below the flange. Thus, the suspended load carriage can continuously move in the upper and lower direction while being guided by the guide rail even at the attached positions of the flanges. Thus, smooth lifting and lowering of the suspended load can be achieved.
(3) In some embodiments, in the configuration (1) or (2), the lifting and lowering mechanism includes:
   a wire connected to the suspended load; and
   a winch configured to wind the wire.

In the configuration (3), by adjusting the amount of the wire wound by the winch, the suspended load can be lifted and lowered with a simple configuration.
(4) In some embodiments, in the configuration (3),
   when the suspended load and the suspended load carriage are lifted and lowered, the wire is inclined at least on a side of a connection end connected with the suspended load and relative to a vertical direction, so that separation of the wire from a center of the tower increases in a downward direction.

In the configuration (4), when the suspended load and the suspended load carriage are lifted and lowered, the wire is inclined at least on a side of a connection end connected with the suspended load and relative to a vertical direction, so that separation of the wire from a center of the tower increases in a downward direction. Thus, the force of pressing the suspended load against the tower can be applied to the suspended load with a horizontal direction component (a component of force directed from the suspended load toward the tower) in tensile force of the wire for pulling the suspended load. Thus, the suspended load can be effectively prevented from swinging.
(5) In some embodiments, in the configuration (3) or (4), the suspended load lifting and lowering device further includes a wire angle adjustment unit for changing a wire angle between a vertical direction and a portion of the wire on a side of the connection end connected with the suspended load.

In the configuration (5), the wire angle between the vertical direction and the portion of the wire on the side of the connection end connected with the suspended load can be appropriately adjusted by the wire angle adjustment unit. Thus, an appropriate horizontal direction component in the tensile force of the wire for pulling the suspended load can be achieved, whereby appropriate pressing force can be applied to the suspended load. Thus, the suspended load can be effectively prevented from swinging.
(6) In some embodiments, in the configuration (5), the suspended load carriage includes:
   a carriage main body guided by the guide rail; and
   a platform portion on which the suspended load is placed, the platform portion being provided on the carriage main body so as to be movable in a horizontal direction, and
   the wire angle adjustment unit is configured to move the platform portion in the horizontal direction.

In the configuration (6), the wire angle adjustment unit can appropriately change the wire angle between the vertical direction and the portion of the wire on the side of the connection end connected with the suspended load, by moving the platform portion of the suspended load carriage away from the center of the tower. Thus, the appropriate horizontal direction component in the tensile force of the wire for pulling the suspended load can be achieved, whereby the appropriate pressing force can be applied to the suspended load. Thus, the suspended load can be effectively prevented from swinging.
(7) In some embodiments, in the configuration (5) or (6), the wire angle adjustment unit is configured to move a portion of the wire above the connection end toward the tower.

In the configuration (7), the wire angle adjustment unit moves the portion of the wire above the connection end toward the tower. Thus, the wire angle between the vertical direction and the portion of the wire on the side of the connection end connected with the suspended load. Thus, the appropriate horizontal direction component in the tensile force of the wire for pulling the suspended load can be achieved, whereby the appropriate pressing force can be applied to the suspended load. Thus, the suspended load can be effectively prevented from swinging.
(8) In some embodiments, in any one of the configurations (5) to (7), the wire angle adjustment unit is configured to move the winch in a direction toward the tower from the suspended load carriage.

In the configuration (8), the wire angle adjustment unit moves the winch in the direction toward the tower from the suspended load carriage. Thus, the wire angle between the vertical direction and the portion of the wire on the side of the connection end connected with the suspended load. Thus, the appropriate horizontal direction component in the tensile force of the wire for pulling the suspended load can be achieved, whereby the appropriate pressing force can be applied to the suspended load. Thus, the suspended load can be effectively prevented from swinging.
(9) In some embodiments, in any one of the configurations (3) to (8), the winch is disposed in a nacelle of the wind turbine generation apparatus or in a lower portion of the tower.

In the configuration (9), the suspended load can be lifted and lowered by adjusting the amount of the wire wound by the winch disposed in the nacelle of the wind turbine generation apparatus or in the lower portion of the tower.
(10) In some embodiments, in any one of the configurations (1) to (9), the suspended load lifting and lowering device further includes:
   a drive carriage positioned above the suspended load carriage, the drive carriage being configured to be capable of coupling with the suspended load carriage; and
   a driving source installed in the drive carriage, the driving source being provided to drive the drive carriage to move upward and downward.

In the configuration (10), the suspended load carriage can be coupled to the drive carriage driven by the driving source. Thus, the suspended load carriage can be moved in the upper and lower direction together with the drive carriage by driving force generated by the driving source, even when the suspended load is not fixed to the suspended load carriage. For example, the empty suspended load carriage, for lifting and lowering the suspended load, can be moved between the lower portion and the upper portion of the tower, with the driving force provided by the driving source.

Also in the configuration (10), the suspended load carriage is coupled to the drive carriage positioned above the suspended load carriage. Thus, even when the suspended load carriage decoupled from the drive carriage accidentally falls, the suspended load carriage can be prevented from colliding with the drive carriage.
(11) A suspended load lifting and lowering method for a wind turbine generation apparatus according to at least one embodiment of the present invention includes the features of claim 11. The suspended load lifting and lowering method includes:
   suspending a suspended load by a lifting and lowering mechanism;
   fixing the suspended load suspended by the lifting and lowering mechanism, to a suspended load carriage; and
   lifting and lowering the suspended load carriage together with the suspended load by the lifting and lowering mechanism in such a manner that the suspended load carriage on which the suspended load is fixed is guided by a guide rail attached to a tower of the wind turbine generation apparatus to move upward and downward along the tower.

In the method (11), the suspended load carriage on which the suspended load is fixed moves upward and downward along the tower while being guided by the guide rails attached to the tower. Thus, the suspended load lifted and lowered by the lifting and lowering mechanism moves upward and downward along the tower together with the suspended load carriage. Thus, the suspended load can be prevented from swinging. The suspended load carriage is lifted and lowered together with the suspended load fixed on the suspended load carriage by the lifting and lowering mechanism. Thus, a lifting and lowering mechanism for lifting and lowering the suspended load carriage needs not to be additionally provided separately from the lifting and lowering mechanism for lifting and lowering the suspended load. Thus, in the method (11), the suspended load being lifted and lowered can be prevented from swinging with a simple configuration.

(12) In some embodiments, the suspended load lifting and lowering method (11) further includes:
before the step of fixing the suspended load, lifting the suspended load carriage and a drive carriage including a driving source along the tower by the driving source to an upper portion of the tower in a state where the drive carriage is coupled to the suspended load carriage; and
separating the suspended load carriage from the drive carriage.

In the method (12), the suspended load carriage can be lifted to the upper portion of the tower together with the drive carriage coupled to the suspended load carriage, with the driving force generated by the driving source. In the method (12), the suspended load and the suspended load carriage can be lifted and lowered by the lifting and lowering mechanism by separating the suspended load carriage from the drive carriage.
(13) In some embodiments, in the method (12), the step of fixing the suspended load includes:
   loading the suspended load in a nacelle of the wind turbine generation apparatus onto the suspended load carriage in a state where the suspended load carriage has been lifted to the upper portion of the tower; and
   fixing the suspended load to the suspended load carriage.

The step of lifting and lowering the suspended load includes, after the step of separating the suspended load carriage, lowering the suspended load carriage together with the suspended load from the upper portion of the tower to a lower portion of the tower by the lifting and lowering mechanism.

In the method (13), in a state where the suspended load carriage has been lifted to the upper portion of the tower, the suspended load in the nacelle located in the upper portion of the wind turbine generation apparatus is loaded onto the suspended load carriage, and is fixed to the suspended load carriage. In addition, after the suspended load carriage is separated from the drive carriage, the suspended load carriage is lowered together with the suspended load from the upper portion of the tower to a lower portion of the tower by the lifting and lowering mechanism.
(14) In some embodiments, the method (12) or (13) further includes:
   fixing a wire of a winch of the lifting and lowering mechanism to the suspended load carriage;
   after the steps of fixing the wire and separating the suspended load carriage, feeding the wire from the winch so that the suspended load carriage is lowered together with the wire to the lower portion of the tower, with the suspended load carriage being guided to move along the tower by the guide rail; and
   after the step of feeding the wire, separating the wire from the suspended load carriage and then attaching the wire to the suspended load at the lower portion of the tower.

The step of fixing of the suspended load includes loading the suspended load at the lower portion of the tower onto the suspended load carriage, and fixing the suspended load to the suspended load carriage.

The step of lifting and lowering the suspended load includes, after the steps of attaching the wire and fixing the suspended load, lifting the suspended load carriage together with the suspended load by the lifting and lowering mechanism to the upper portion of the tower.

In the method (14), the wire of the winch of the lifting and lowering mechanism is lowered from the tower upper portion to the tower lower portion, and is attached to the suspended load fixed on the suspended load carriage at the lower portion. Then, the suspended load at the lower portion of the tower can be lifted together with the suspended load carriage from the tower lower portion to the tower upper portion.
(15) In some embodiments, in any one of the methods (11) to (14),
   the lifting and lowering mechanism includes:
   a wire connected to the suspended load; and
   a winch winding the wire.

The method further includes changing a wire angle between a vertical direction and a portion of the wire on a side of a connection end connected with the suspended load.

In the method (15), in the step of changing a wire angle, the angle between the vertical direction and the portion of the wire on the side of the connection end connected with the suspended load can be appropriately adjusted. Thus, an appropriate horizontal direction component in the tensile force of the wire for pulling the suspended load can be achieved, whereby appropriate pressing force can be applied to the suspended load. Thus, the suspended load can be effectively prevented from swinging.

According to at least one embodiment of the present invention, a suspended load lifting and lowering device and a suspended load lifting and lowering method, for a wind turbine power generation apparatus, capable of preventing a suspended load being lifted and lowered from swinging are provided.

### BRIEF DESCRIPTION OF DRAWINGS

FIG. 1 is a diagram illustrating a schematic configuration of a wind turbine power generation apparatus including a suspended load lifting and lowering device according to one embodiment;
FIG. 2 is a perspective view of the suspended load lifting and lowering device according to one embodiment;
FIG. 3 is a plan view of the suspended load lifting and lowering device illustrated in FIG. 2;
FIG. 4 is a schematic view of a suspended load lifting and lowering device according to one embodiment;
FIG. 5 is a schematic view illustrating a configuration of the suspended load lifting and lowering device according to one embodiment;
FIG. 6 is a schematic view illustrating a configuration of the suspended load lifting and lowering device according to one embodiment;
FIG. 7 is a schematic view illustrating a configuration of the suspended load lifting and lowering device according to one embodiment;
FIG. 8 is a schematic view illustrating a configuration of the suspended load lifting and lowering device according to one embodiment;
FIG. 9 is a diagram illustrating an example of a suspended load lifting and lowering method according to one embodiment; and
FIG. 10 is a diagram illustrating an example of a suspended load lifting and lowering method according to one embodiment.

### DETAILED DESCRIPTION

Embodiments of the present invention will now be described in detail with reference to the accompanying drawings. It is intended, however, that unless particularly specified, dimensions, materials, shapes, relative positions, and the like of components described in the embodiments or illustrated in the accompanying drawings shall be interpreted as illustrative only and not limitative of the scope of the present invention.

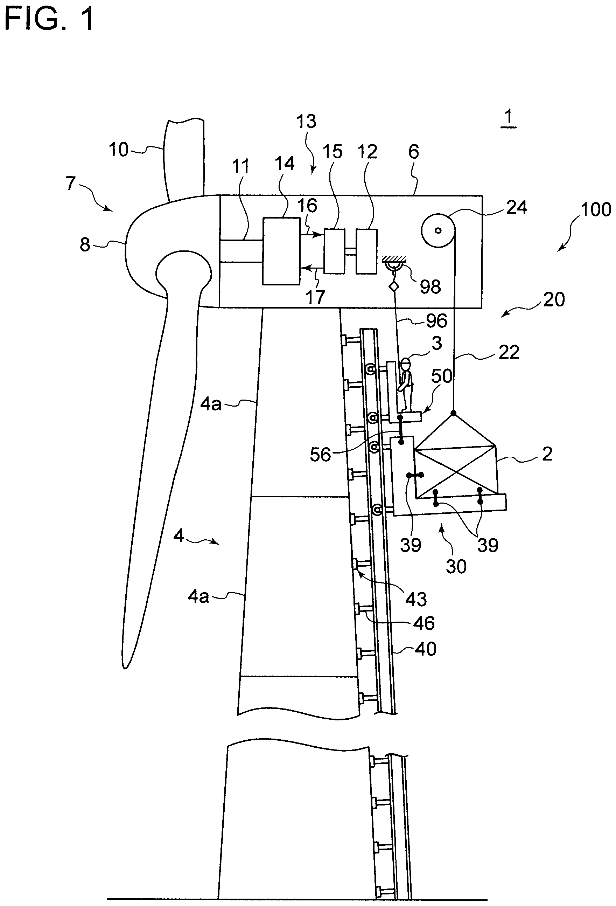

First of all, an example of an overall configuration of a wind turbine power generation apparatus employing a suspended load lifting and lowering device according to some embodiments is described with reference to FIG. 1. FIG. 1 is a diagram illustrating a schematic configuration of a wind turbine power generation apparatus including a suspended load lifting and lowering device according to one embodiment.

As illustrated in FIG. 1, a wind turbine power generation apparatus 1 includes: a rotor 7 including at least one blade 10 and a hub 8 on which the blades 10 are radially arranged; a nacelle 6 that rotatably supports the rotor 7; and a tower 4 for supporting the nacelle 6. The tower 4 stands on the ground or on water, and has an upper portion supporting the nacelle 6.

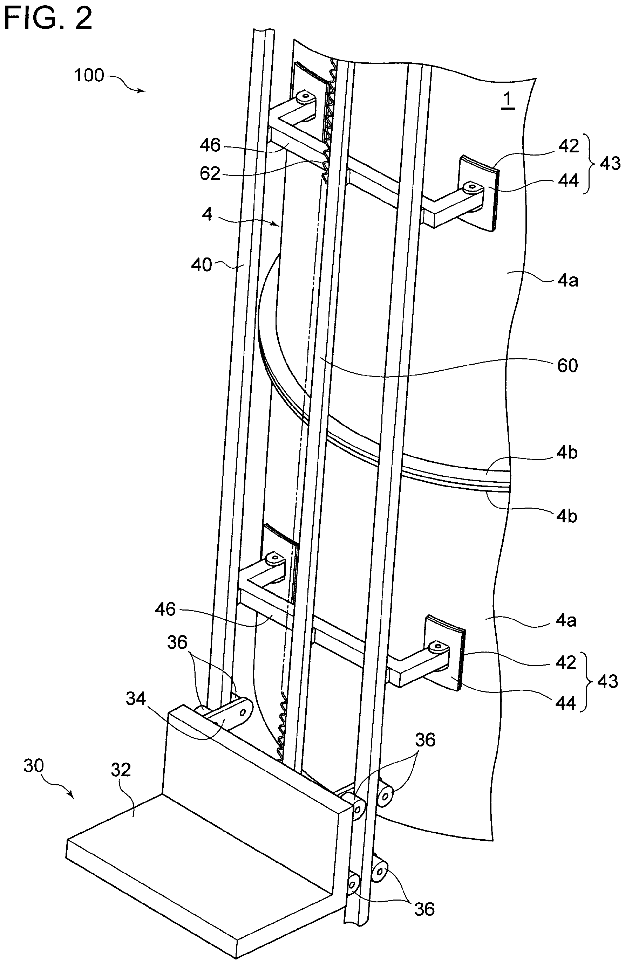

The tower 4 may include a plurality of cylindrical tower sections 4a coupled to each other in a vertical direction. In such a case, the tower sections 4a may each have flanges 4b provided on upper and lower ends, and the flanges 4b of the adjacent tower sections 4a may be fastened to and thus coupled to each other with bolts (see FIG. 2).

The wind turbine power generation apparatus 1 illustrated in FIG. 1 includes a rotational shaft 11 coupled to the hub 8; a generator 12 that generates power; and a drive train 13 that transmits rotational energy of the rotational shaft 11 to the generator 12. In the example illustrated in the figure, the drive train 13 and the generator 12 are provided in the nacelle 6. Alternatively, any one of the drive train 13 and the generator 12 may be disposed on the side of the tower 4.

When the blade 10 receives wind, the rotational shaft 11 rotates together with the rotor 7 including the blade 10 and the hub 8. The rotational energy of the rotational shaft 11 is transmitted to the generator 12 through the drive train 13, and the generator 12 generates power.

The rotational shaft 11 rotates together with the rotor 7 including the blade 10 and the hub 8. The hub 8 may be covered with a hub cover (spinner). The rotational shaft 11 is rotatably supported by the nacelle 6 via a pair of bearings (not illustrated).

The drive train 13 includes: a hydraulic pump 14 attached to the rotational shaft 11; and a hydraulic motor 15 connected to the hydraulic pump 14 via a high-pressure oil line 16 and a low-pressure oil line 17. The hydraulic pump 14 is driven by the rotational shaft 11 to increase the pressure of the hydraulic oil to generate high pressure hydraulic oil (pressure oil). The pressure oil generated by the hydraulic pump 14 is supplied to the hydraulic motor 15 through the high-pressure oil line 16, to drive the hydraulic motor 15. The hydraulic oil, having a low pressure after working in the hydraulic motor 15, returns to the hydraulic pump 14 through the low-pressure oil line 17. The hydraulic motor 15 has an output shaft connected to an input shaft of the generator 12. Thus, the rotation of the hydraulic motor 15 is input to the generator 12.

FIG. 1 illustrates an example where a hydraulic transmission is used for the drive train 13. However, this configuration should not be construed in a limiting sense. Another drive train such as a speed increasing gear may be employed. Alternatively, a configuration in which the hub 8 or the rotational shaft 11 and the generator 12 are directly coupled to each other with no drive train 13 provide may be employed.

A suspended load lifting and lowering device and a suspended load lifting and lowering method for a wind turbine power generation apparatus using the suspended load lifting and lowering device according to some embodiments are described below.

A suspended load lifting and lowering device 100 illustrated in FIG. 1 includes: a lifting and lowering mechanism 20 for lifting and lowering a suspended load 2; a suspended load carriage 30 on which the suspended load 2 suspended by the lifting and lowering mechanism 20 is fixed; and a guide rail 40 attached to the tower 4 of the wind turbine power generation apparatus 1. The suspended load carriage 30 is configured to be movable along the tower 4 while being guided by the guide rail 40. The suspended load 2 may be fixed to the suspended load carriage 30 by using a fixing member 39.

For example, the suspended load 2 may be a component of the wind turbine power generation apparatus 1 disposed in the nacelle 6. For example, when the wind turbine power generation apparatus 1 employs the hydraulic transmission including the hydraulic pump 14 and the hydraulic motor 15 as the drive train 13, the suspended load 2 may be the hydraulic pump 14 or the hydraulic motor 15.

The lifting and lowering mechanism 20 includes a wire 22 connected to the suspended load 2, and a winch 24 configured to wind the wire 22. The suspended load 2 connected to the wire 22 can be lifted and lowered by adjusting the amount of the wire 22 wound by the winch 24 in the lifting and lowering mechanism 20.

In the suspended load lifting and lowering device 100 illustrated in FIG. 1, when the suspended load 2 is lifted and lowered by the lifting and lowering mechanism 20, the suspended load carriage 30 fixed to the suspended load 2 is lifted and lowered by the lifting and lowering mechanism 20 together with the suspended load 2.

In the example illustrated in FIG. 1, the winch 24 of the lifting and lowering mechanism 20 is disposed in the nacelle 6 of the wind turbine power generation apparatus 1. In another embodiment, the winch 24 of the lifting and lowering mechanism 20 may be disposed at a lower portion of the tower 4 of the wind turbine power generation apparatus 1.

The guide rail 40 may be attached to the tower 4 via attachment jigs 43 and rail attachment plates 46.

In the suspended load lifting and lowering device 100 described above, the suspended load carriage 30 on which the suspended load 2 is fixed moves upward and downward along the tower 4 while being guided by the guide rail 40 attached to the tower 4. Thus, when the suspended load 2 is lifted and lowered by the lifting and lowering mechanism 20, the suspended load 2 moves upward and downward along the tower 4 together with the suspended load carriage 30. Thus, the suspended load 2 can be prevented from swinging. The suspended load carriage 30 is lifted and lowered by the lifting and lowering mechanism 20 together with the suspended load 2 fixed on the suspended load carriage 30. Thus, a lifting and lowering mechanism for lifting and lowering the suspended load carriage 30 needs not to be provided in addition to the lifting and lowering mechanism 20 for lifting and lowering the suspended load 2. All things considered, in the suspended load lifting and lowering device 100, the suspended load 2 can be prevented from swinging, while being lifted and lowered, with a simple configuration.

The wind turbine power generation apparatus 1 may be a floating wind turbine power generation apparatus standing on a floating structure floating on water. In such a case, with the suspended load lifting and lowering device 100 described above, the suspended load 2 can be stably lifted and lowered in the floating wind turbine power generation apparatus on the floating structure that is likely to swing by being affected by waves, tides, and the like.

The suspended load lifting and lowering device 100 illustrated in FIG. 1 further includes a drive carriage 50 positioned above the suspended load carriage 30; and a driving source (not illustrated), installed in the drive carriage 50, for driving the drive carriage 50 to move upward and downward. The drive carriage 50 can be coupled to (decoupled from) the suspended load carriage 30. For example, the driving source may be an electric motor or an internal combustion engine. The drive carriage 50 and the suspended load carriage 30 may be coupled to each other via a coupling portion 56 such as a rope.

When the suspended load carriage 30 can be coupled to the drive carriage 50 driven by the driving source as described above, the suspended load carriage 30 can be moved in the upper and lower direction together with the drive carriage 50 by driving force generated by the driving source, even when the suspended load 2 is not fixed to the suspended load carriage 30. For example, the empty suspended load carriage 30, for lifting and lowering the suspended load 2, can be moved between the lower portion and the upper portion of the tower 4, with the driving force provided by the driving source.

As described above, the suspended load carriage 30 is coupled to the drive carriage 50 positioned above the suspended load carriage 30. Thus, even when the suspended load carriage 30 decoupled from the drive carriage 50 accidentally falls, the suspended load carriage 30 can be prevented from colliding with the drive carriage 50.

An operator 3 can perform various operations on the drive carriage 50.

For example, an operation of assembling the guide rail 40 can be performed by using the drive carriage 50. In such a case, for example, a lowermost one of a plurality of rail sections, obtained by diving the guide rail 40 in the upper and lower direction, is attached to a lowermost portion of the tower 4, and the drive carriage 50 is attached to the rail section attached to the lowermost portion. Then, the operator 3 on the drive carriage 50 attaches the rail sections one by one above the lowermost rail portion while being lifted by the drive carriage 50 along the rail portions that have been attached to the tower 4. In this manner, the operation of constructing the guide rail 40 can be performed by using the drive carriage 50.

The suspended load lifting and lowering device 100 may include an anchor wire 96 with one end connected to a fixing member 98 attached to the nacelle 6 or the hub 8 and the other end connected to the operator 3 on the drive carriage 50. The operator 3 connected to the nacelle 6 or the hub 8 with the anchor wire 96 can be prevented from falling from the drive carriage 50.

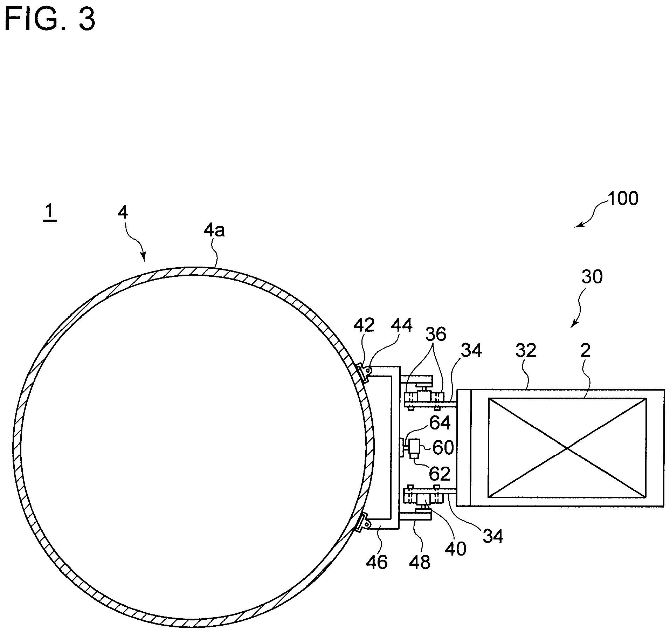

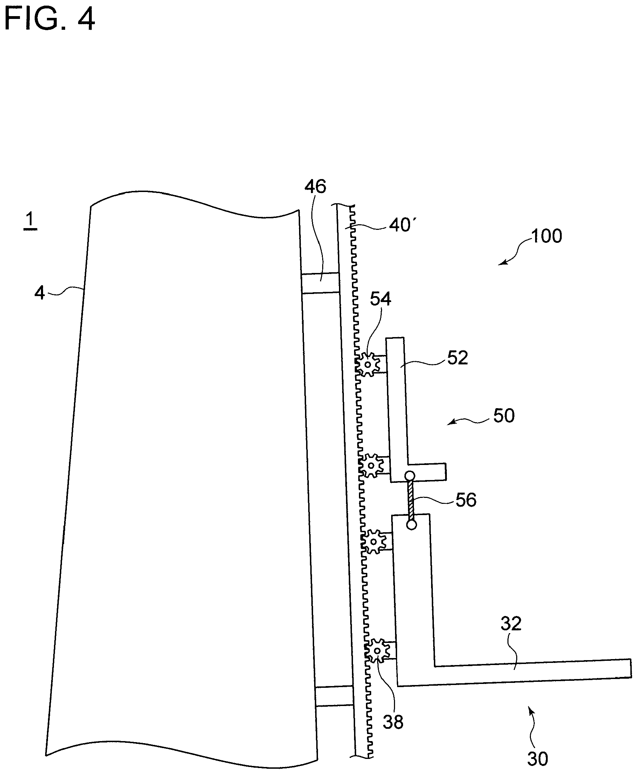

FIG. 2 is a perspective view of the suspended load lifting and lowering device according to one embodiment. FIG. 3 is a plan view of the suspended load lifting and lowering device illustrated in FIG. 2. FIG. 4 is a schematic view of a suspended load lifting and lowering device according to one embodiment. The drive carriage 50 is omitted in FIG. 2. FIG. 3 is a lateral cross-sectional view of the suspended load lifting and lowering device and the tower 4 of the wind turbine power generation apparatus 1.

In the exemplary embodiment illustrated in FIGS. 2 and 3, the guide rail 40 is attached to the tower 4 via the attachment jigs 43 and the rail attachment plates 46.

In the example illustrated in FIGS. 2 and 3, the attachment jigs 43 each include a magnet 42 magnetically bonded to the outer circumferential surface of the tower 4, and a bracket 44 that is fixed to the magnet 42 and used for attaching the rail attachment plate 46 to the magnet 42.

The plurality of rail attachment plates 46 are arranged at an interval along the upper and lower direction, and are each attached to the outer circumferential surface of the tower 4 via the attachment jigs 43. The guide rail 40 is attached to the plurality of rail attachment plates 46 via brackets 48. In this manner, the guide rail 40 is attached to the tower 4.

In the exemplary embodiment illustrated in FIGS. 2 and 3, the suspended load carriage 30 includes: a carriage main body 32 on which the suspended load 2 is placed; a plurality of rollers 36 provided to travel on the guide rail 40; and an attachment section 34 for attaching the rollers 36 to the carriage main body 32. The suspended load carriage 30 is provided with a pair of the rollers 36 that rotate while sandwiching the guide rail 40. Thus, the suspended load carriage 30 can move in the upper and lower direction along the guide rails 40 while maintaining its posture with respect to the guide rails 40.

The drive carriage 50 illustrated in FIG. 1 may be movable in the upper and lower direction along the tower 4 while being guided by the guide rails 40 for guiding the suspended load carriage 30 (see, for example, FIG. 4), or may be movable in the upper and lower direction along the tower 4 while being guided by a rail provided separately from the guide rails 40 (see, for example, FIGS. 2 and 3).

For example, in the example illustrated in FIGS. 2 and 3, a drive carriage rail 60, provided separately from the guide rail 40, is attached to the tower 4. The drive carriage rail 60 may be attached to the rail attachment plates 46 via a bracket 64. A rack 62 is attached to the drive carriage rail 60. A pinion gear attached to the drive carriage 50 meshes with the rack 62. Thus, the drive carriage 50 can move in the upper and lower direction along the tower 4 while being guided by the drive carriage rail 60, with the driving force generated by the driving source.

For example, in the example illustrated in FIG. 4, the drive carriage 50 and the suspended load carriage 30 are guided by a common guide rail 40' in the upper and lower direction along the tower. The guide rail 40' illustrated in FIG. 4 is a rack gear rail attached to the tower via the rail attachment plates 46. In this case, pinion gears 54 are attached to a platform 52 of the drive carriage 50. Pinion gears 38 are attached to the carriage main body 32 of the suspended load carriage 30. The pinion gear 54 and the pinion gear 38 mesh with the guide rail 40' (rack gear rail). Thus, the drive carriage 50 and the suspended load carriage 30 are guided by the guide rail 40' to move in the upper and lower direction along the tower 4. In the example illustrated in FIG. 4, the rail attachment plates 46 may be attached to the outer circumferential surface of the tower 4 via the attachment jigs 43 illustrated in FIGS. 2 and 3.

In some embodiments, as illustrated in FIG. 2, the guide rails 40 are disposed while being separated from the outer circumferential surface of the tower 4, so as not to come into contact with a flange 4b as a coupling portion for the tower sections 4a.

With this configuration, the guide rail 40 can be continuously disposed in a section above the flange 4b and below the flange 4b. Thus, the suspended load carriage 30 can continuously move in the upper and lower direction while being guided by the guide rail 40 even at the attached positions of the flanges 4b. Thus, smooth lifting and lowering of the suspended load 2 can be achieved.

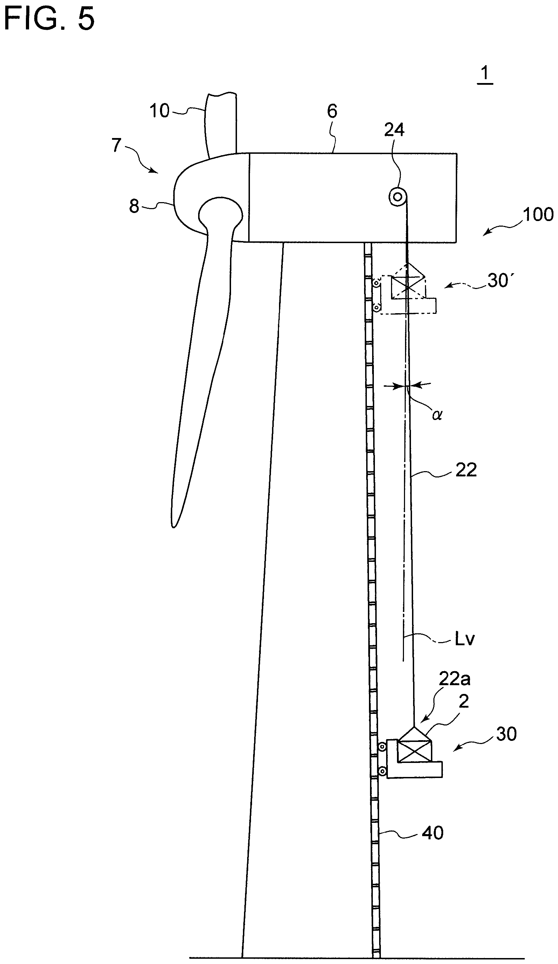

FIG. 5 is a schematic view illustrating a configuration of the suspended load lifting and lowering device 100 according to one embodiment.

In some embodiments, when the suspended load 2 and the suspended load carriage 30 are lifted and lowered, the wire 22 of the lifting and lowering mechanism 20 is inclined at least on the side of a connection end 22a connected with the suspended load 2 and relative to a vertical, so that separation of the wire 22 from the center of the tower 4 increases in a downward direction.

For example, in one example, as illustrated in FIG. 5, when the suspended load carriage 30' is positioned at and around an uppermost portion of the tower 4, the wire 22, with which the suspended load 2 is suspended, extends substantially along the vertical direction from the winch 24. As illustrated in FIG. 5, the tower 4 has a shape with a diameter increasing in the downward direction. In such a configuration, when the suspended load 2 and the suspended load carriage 30 are lifted and lowered (when the suspended load carriage is at a relatively lower position with respect to the tower 4), the wire 22 is inclined relative to the vertical direction (direction along a straight line Lv), so that separation of the wire 22 from the center of the tower 4 increases in the downward direction (thus, α > 0 holds true where α is an angle (wire angle) between the wire 22 and the vertical direction (the straight line Lv)).

In such a case, force of pressing the suspended load 2 against the tower 4 can be applied to the suspended load 2 with a horizontal direction component (a component of force directed from the suspended load 2 toward the tower 4) in tensile force of the wire 22 for pulling the suspended load 2. Thus, the suspended load 2 can be effectively prevented from swinging.

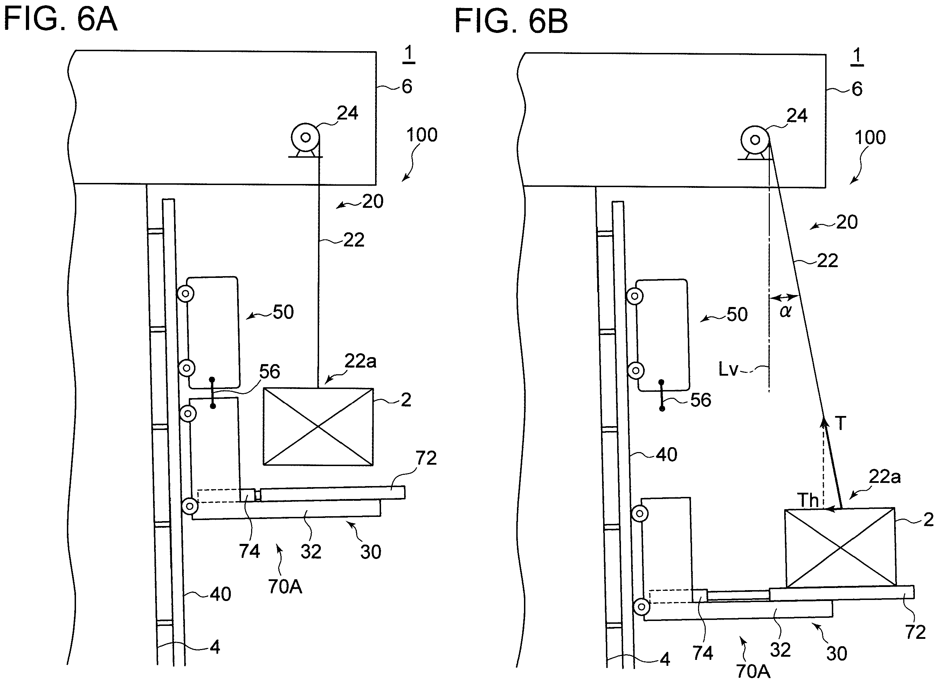

FIGS. 6 to 8 are each a schematic view illustrating a configuration of the suspended load lifting and lowering device 100 according to one embodiment. FIGS. 6A, 7A, and 8A each illustrate a state where the suspended load 2 is placed on the suspended load carriage 30 at the upper portion of the tower 4. FIGS. 6B, 7B, and 8B each illustrate a state where the suspended load 2 is being lifted/lowered by the lifting and lowering mechanism 20.

In some embodiments, the suspended load lifting and lowering device 100 further includes a wire angle adjustment unit 70 (70A to 70C) for changing the angle (wire angle α) between the vertical direction (direction of the straight line Lv) and a portion of the wire 22 on the side of the connection end 22a connected with the suspended load 2.

With the wire angle adjustment unit 70, the angle (wire angle) α between the vertical direction (direction of the straight line Lv) and the portion of the wire 22 on the side of the connection end 22a connected with the suspended load 2 can be appropriately adjusted. Thus, an appropriate horizontal direction component Th in the tensile force T of the wire 22 for pulling the suspended load 2 can be achieved, whereby appropriate pressing force can be applied to the suspended load 2. Thus, the suspended load 2 can be effectively prevented from swinging.

For example, in an exemplary embodiment illustrated in FIG. 6, the suspended load carriage 30 includes the carriage main body 32 guided by the guide rails 40, and a platform portion 72 on which the suspended load is placed. The platform portion 72 is provided to the carriage main body 32 so as to be movable in the horizontal direction. The wire angle adjustment unit 70A includes a hydraulic cylinder 74, and can move the platform portion 72 in the horizontal direction by operating the hydraulic cylinder 74.

As illustrated in FIG. 6A, in the portion around the upper portion of the tower 4, the wire 22 extends in the vertical direction, and thus the tensile force T of the wire 22 includes almost no horizontal direction component.

As illustrated in FIG. 6B, when the wire angle adjustment unit 70A operates the hydraulic cylinder 74 so as to move the platform portion 72 in the horizontal direction away from the center of the tower 4, the angle (wire angle) α between the vertical direction (direction of the straight line Lv) and the portion of the wire 22 on the side of the connection end 22a connected with the suspended load 2 can be increased. Thus, an appropriate horizontal direction component Th of the tensile force T of the wire 22 can be achieved, whereby appropriate pressing force in the horizontal direction toward the tower 4 can be applied to the suspended load 2. Thus, the suspended load 2 can be effectively prevented from swinging.

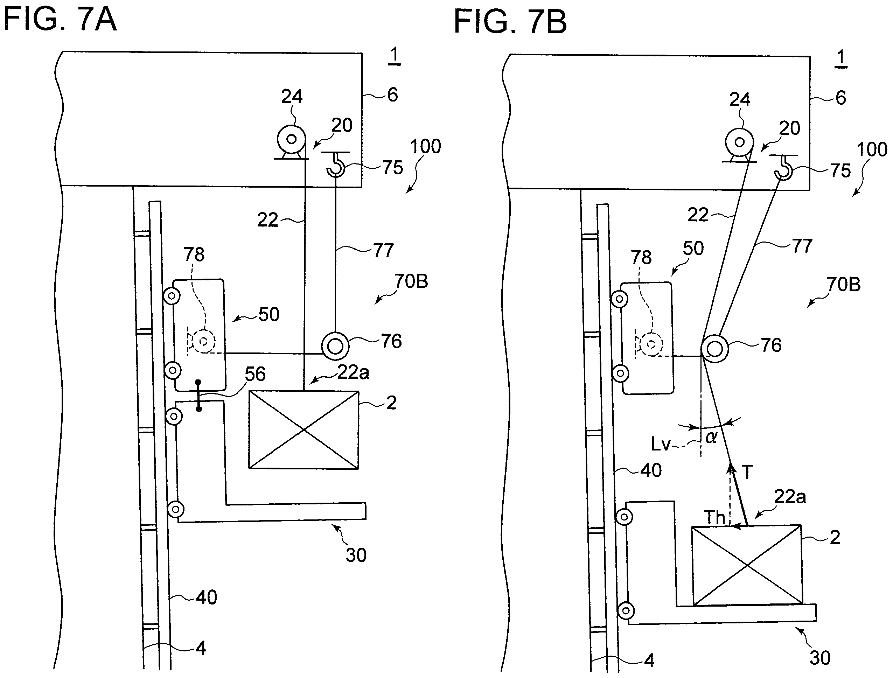

For example, in an exemplary embodiment illustrated in FIG. 7, the wire angle adjustment unit 70B includes: a wire hook 75 in the nacelle 6; a pulley 76; a winch 78 disposed on the side of the tower 4 (for example, the drive carriage 50); and a wire 77. As illustrated in FIGS. 7A and 7B, the wire 77 extends via the pulley 76 and has one end side connected to the wire hook 75 and the other end side wound by the winch 78 on the side of the tower 4. By adjusting the amount of the wire 77 wound by the winch 78, the pulley 76 is pulled toward the tower 4, whereby the portion of the wire 22 above the connection end 22a is moved toward the tower 4.

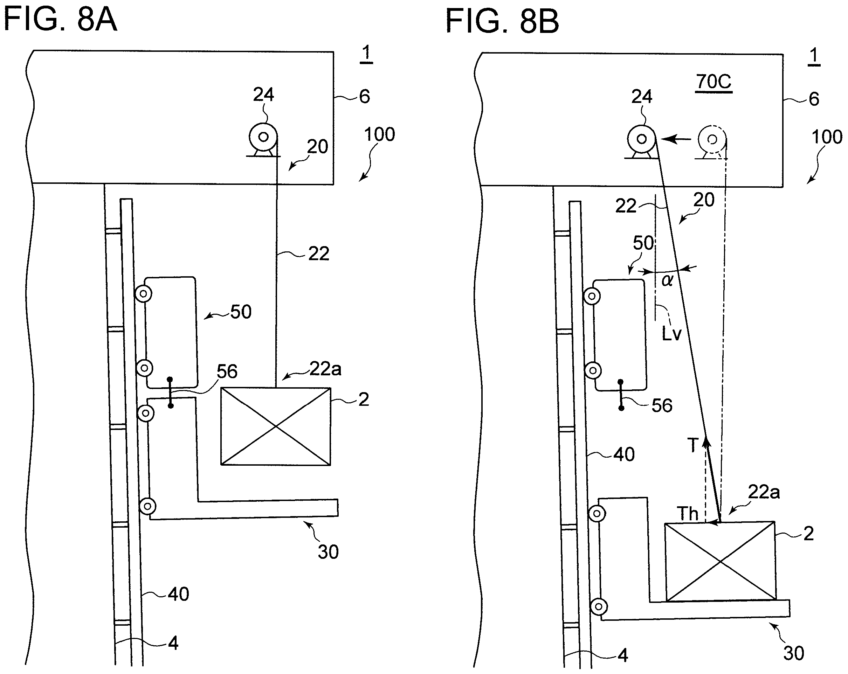

For example, in the exemplary embodiment illustrated in FIGS. 8A and 8B, the wire angle adjustment unit 70C is configured to move the winch 24 toward the tower 4 from the suspended load carriage 30. For example, the wire angle adjustment unit 70C may be a hydraulic cylinder provided to move the winch 24 toward the tower 4 from the suspended load carriage 30.

As illustrated in FIGS. 6B, 7B, and 8B, each of the wire angle adjustment units 70A to 70C can appropriately change the wire angle α between the vertical direction and the portion of the wire 22 on the side of the connection end 22a connected with the suspended load 2. Thus, the appropriate horizontal direction component Th in the tensile force T of the wire 22 for pulling the suspended load 2 can be achieved, whereby the appropriate pressing force can be applied to the suspended load 2. Thus, the suspended load 2 can be effectively prevented from swinging.

Each of the wire angle adjustment units 70A, 70B and 70C may be independently used. Alternatively, two or more of the wire angle adjustment units 70A, 70B, and 70C may be used in combination to adjust the wire angle α between the vertical direction and the portion of the wire 22 on the side of the connection end 22a connected with the suspended load 2.

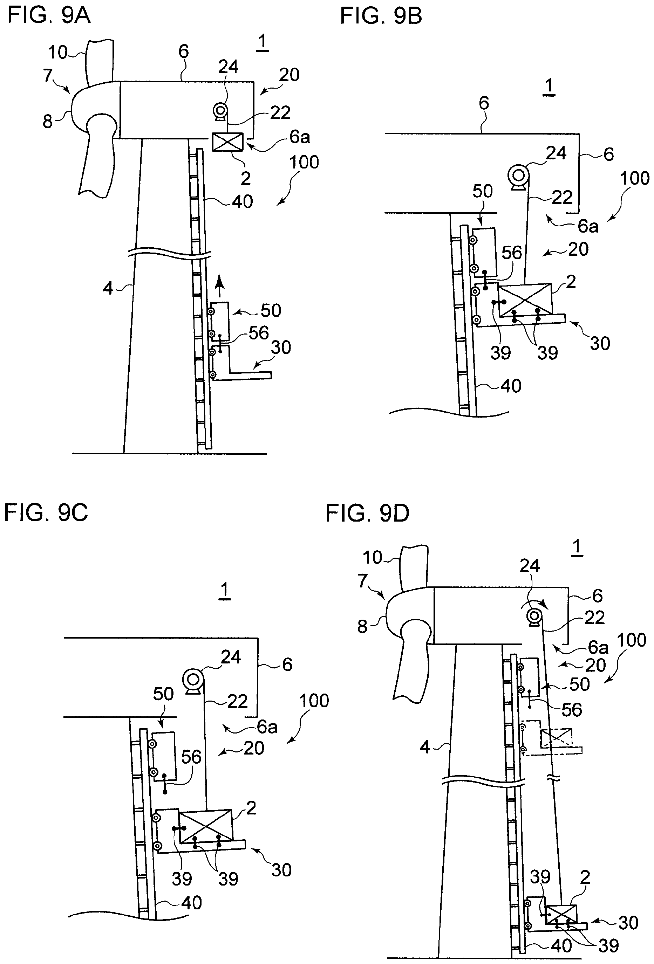

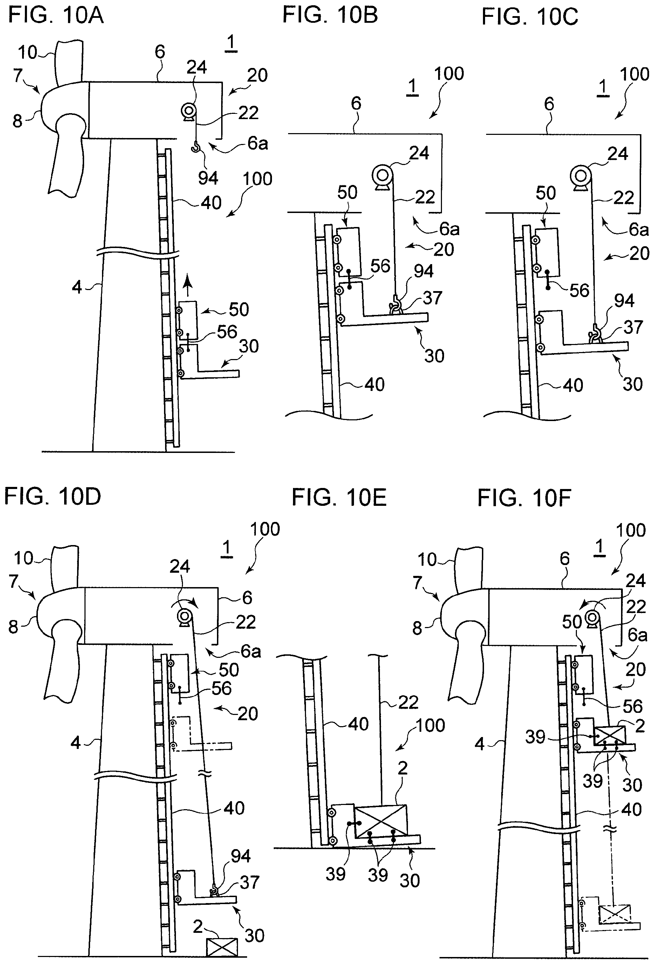

FIGS. 9 and 10 are each a diagram illustrating an example of a suspended load lifting and lowering method using the suspended load lifting and lowering device 100 described above. FIG. 9 illustrates an example of a method of lowering the suspended load 2 in the nacelle 6. FIG. 10 is an example of a diagram illustrating a method of lifting the suspended load 2 from the lower portion of the tower 4.

First of all, an example of the method of lowering the suspended load 2 in the nacelle 6 is described with reference to FIG. 9.

For example, in the method illustrated in FIG. 9, the drive carriage 50 and the suspended load carriage 30 are first lifted along the tower 4 to the upper portion of the tower 4 by the driving source, in a state where the drive carriage 50 including the driving source is coupled to the suspended load carriage 30 with the coupling portion 56 (carriage lifting step). Then, the suspended load 2 in the nacelle 6 is suspended by the lifting and lowering mechanism 20 (suspending step) (FIG. 9A). In the carriage lifting step, the upward movement of the suspended load carriage 30 may be guided by the guide rails 40. In the suspending step, the suspended load 2 may be suspended by the lifting and lowering mechanism 20 through an opening 6a formed on the nacelle 6.

Next, in a state where the suspended load carriage 30 has been lifted to the upper portion of the tower 4, the suspended load 2 suspended by the lifting and lowering mechanism 20 is placed on the suspended load carriage 30, and is fixed on the suspended load carriage 30 by using the fixing member 39, for example (suspended load fixing step; FIG. 9B).

Next, the suspended load carriage 30 is separated from the drive carriage 50 (carriage separating step; FIG. 9C). In this process, the suspended load carriage 30 may be separated from the drive carriage 50 by detaching the coupling portion 56 from one of the drive carriage 50 and the suspended load carriage 30.

The suspended load carriage 30 is lowered by the lifting and lowering mechanism 20 together with the suspended load 2, with the suspended load carriage 30 on which the suspended load 2 is fixed moving upward and downward while being guided along the tower 4 by the guide rails 40 attached to the tower 4 of the wind turbine power generation apparatus 1 (suspended load lifting and lowering step; FIG. 9D). Specifically, the wire 22 is fed from the winch 24 of the lifting and lowering mechanism 20, so that the suspended load carriage 30 is lowered together with the suspended load 2 from the upper portion of the tower 4 to the lower portion of the tower 4.

Next, an example of the method of lifting the suspended load 2 from the lower portion of the tower 4 is described with reference to FIG. 10.

For example, in the method illustrated in FIG. 10, the drive carriage 50 and the suspended load carriage 30 are first lifted along the tower 4 to the upper portion of the tower 4 by the driving source, in a state where the drive carriage 50 including the driving source is coupled to the suspended load carriage 30 with the coupling portion 56 (carriage lifting step; FIG. 10A).

Next, the wire 22 of the winch 24 of the lifting and lowering mechanism 20 is fixed to the suspended load carriage 30 (wire fixing step; FIG. 10B). In this process, the wire 22 may be fixed to the suspended load carriage 30, with a hook 94, provided to the lower end portion of the wire 22, attached to a suspending attachment 37 of the suspended load carriage 30.

Next, the suspended load carriage 30 is separated from the drive carriage 50 (carriage separating step; FIG. 10C). In the process, the suspended load carriage 30 may be separated from the drive carriage 50 by detaching the coupling portion 56 from one of the drive carriage 50 and the suspended load carriage 30.

Then, the suspended load carriage 30 is lowered to the lower portion of the tower 4 together with the wire 22, by feeding the wire 22 from the winch 24, with the suspended load carriage 30 being guided to move along the tower 4 by the guide rails 40 (wire lowering step; FIG. 10D).

Next, the wire 22 is detached from the suspended load carriage 30, and then is attached to the suspended load 2 at the lower portion of the tower 4 (wire attaching step), and the suspended load 2 at the lower portion of the tower 4 is placed on the suspended load carriage 30 and is fixed on the suspended load carriage 30 by using the fixing member 39, for example (suspended load fixing step) (FIG. 10E). Any one of the wire attaching step and the suspended load fixing step may be executed before the other.

Then, the suspended load carriage 30 is lifted from the lower portion to the upper portion of the tower 4 together with the suspended load 2 by the lifting and lowering mechanism 20. In this process, the suspended load carriage 30 on which the suspended load 2 is fixed is guided to be lifted along the tower 4 by the guide rails 40 attached to the tower 4 of the wind turbine power generation apparatus 1.

In the method described above, the suspended load carriage 30 on which the suspended load 2 is fixed moves upward and downward along the tower 4 while being guided by the guide rails 40 attached to the tower 4. Thus, the suspended load 2 lifted and lowered by the lifting and lowering mechanism 20 moves upward and downward along the tower 4 together with the suspended load carriage 30. Thus, the suspended load 2 can be prevented from swinging. The suspended load carriage 30 is lifted and lowered together with the suspended load 2 fixed on the suspended load carriage 30 by the lifting and lowering mechanism 20. Thus, a lifting and lowering mechanism for lifting and lowering the suspended load carriage 30 needs not to be additionally provided separately from the lifting and lowering mechanism 20 for lifting and lowering the suspended load 2. Thus, in the method described above, the suspended load 2 being lifted and lowered can be prevented from swinging with a simple configuration.

In the method described above, the suspended load carriage 30 can be lifted to the upper portion of the tower 4 together with the drive carriage 50 coupled to the suspended load carriage 30, with the driving force generated by the driving source. In the method described above, the suspended load 2 and the suspended load carriage 30 can be lifted and lowered by the lifting and lowering mechanism 20 by separating the suspended load carriage 30 from the drive carriage 50.

The expressions used herein that mean relative or absolute arrangement, such as "in a direction", "along a direction", "in parallel with", "orthogonal to", "center", "concentrically", and "coaxial" mean not only exactly what they refer to but also such states that are relatively displaced with a tolerance or by an angle or distance that is small enough to achieve the same level of functionality.

For example, the expressions used herein that mean things are equivalent to each other, such as "the same", "equivalent", and "uniform", mean not only exactly equivalent states but also such states that have a tolerance or a difference that is small enough to achieve the same level of functionality.

For example, expressions that represent shapes, such as quadrangles and cylindrical shapes, mean not only what they refer to in a geometrically strict sense but also shapes having some irregularities, chamfered portions, or the like that can provide the same level of functionality.

The expressions "including", "comprising", and "provided with" one component are not exclusive expressions that exclude other components.

## Claims

1. A suspended load lifting and lowering device (100) for a wind turbine power generation apparatus (1) which includes a tower (4),
the device (100) comprising:
a lifting and lowering mechanism (20) configured to suspend and to lift and lower a suspended load (2);
a suspended load carriage (30;30') on which the suspended load (2) suspended by the lifting and lowering mechanism (20) can be fixed, wherein the suspended load carriage (30;30') is configured to be movable along the tower (4) of the wind turbine generation apparatus (1); and
a guide rail (40) attachable to the tower (4), wherein the guide rail (40) is configured to guide the suspended load carriage (30;30') in such a manner that the suspended load carriage (30;30') moves up and down along the tower (4),
wherein
the suspended load carriage (30;30') is configured to be lifted and lowered together with the suspended load (2) by means of the lifting and lowering mechanism (20) when the suspended load (2) is fixed to the suspended load carriage (30;30') and the suspended load (2) is lifted and lowered by means of attachment of the lifting and lowering mechanism (20) to the suspended load (2).

2. The suspended load lifting and lowering device (100) according to claim 1 for a wind turbine generation apparatus (1) of which the tower (4) includes a plurality of tower sections (4a) coupled to each other, wherein
the guide rail (40) is configured to be disposed while being separated from an outer circumferential surface of the tower (4) so as not to come into contact with a flange portion which is a coupling portion for the tower sections (4a).

3. The suspended load lifting and lowering device (100) according to claim 1 or 2, wherein the lifting and lowering mechanism (20) includes:
a wire (22) connected to the suspended load (2); and
a winch (24) configured to wind the wire (22).

4. The suspended load lifting and lowering device (100) according to claim 3, wherein when the suspended load (2) and the suspended load carriage (30;30') are lifted and lowered, in a mounted state on the wind turbine generation apparatus (1), the wire (22) is inclined at least on a side of a connection end (22a) connected with the suspended load (2) and relative to a vertical direction (Lv), so that separation of the wire (22) from a center of the tower (4) increases in a downward direction.

5. The suspended load lifting and lowering device (100) according to claim 3 or 4, further comprising a wire angle adjustment unit (70;70A;70B;70C) for changing a wire angle (α) between a vertical direction (Lv) and a portion of the wire (22) on a side of the connection end (22a) connected with the suspended load (2).

6. The suspended load lifting and lowering device (100) according to claim 5, wherein
the suspended load carriage (30;30') includes:
a carriage main body (32) configured to be guided by the guide rail (40); and
a platform portion (72) on which the suspended load (2) can be placed, the platform portion (72) being provided on the carriage main body (32) so as to be movable in a horizontal direction, and
the wire angle adjustment unit (70;70A;70B;70C) is configured to move the platform portion (72) in the horizontal direction.

7. The suspended load lifting and lowering device (100) according to claim 5 or 6, wherein, in a mounted state on the wind turbine generation apparatus (1), the wire angle adjustment unit (70;70A;70B;70C) is configured to move a portion of the wire (22) above the connection end (22a) toward the tower (4).

8. The suspended load lifting and lowering device (100) according to any one of claims 5 to 7, wherein, in a mounted state on the wind turbine generation apparatus (1), the wire angle adjustment unit (70;70A;70B;70C) is configured to move the winch (24) in a direction toward the tower (4) from the suspended load carriage (30;30').

9. The suspended load lifting and lowering device (100) according to any one of claims 3 to 8, wherein, in a mounted state on the wind turbine generation apparatus (1), the winch (24) is disposed in a nacelle (6) of the wind turbine generation apparatus (1) or in a lower portion of the tower (4) .

10. The suspended load lifting and lowering device (100) for according to any one of claims 1 to 9, further comprising:
a drive carriage (50) positioned above the suspended load carriage (30;30'), the drive carriage being configured to be capable of coupling with the suspended load carriage (30;30'); and
a driving source installed in the drive carriage, the driving source being provided to drive the drive carriage (50) to move upward and downward.

11. A suspended load lifting and lowering method for a wind turbine generation apparatus (1) which includes a tower (4), the method comprising:
suspending a suspended load (2) by a lifting and lowering mechanism (20);
fixing the suspended load (2) suspended by the lifting and lowering mechanism (20), to a suspended load carriage (30;30'); and
lifting and lowering the suspended load carriage (30;30') together with the suspended load (2) which is suspended by the lifting and lowering mechanism (20), by means of attachment of the the lifting and lowering mechanism (20) to the suspended load (2), in such a manner that the suspended load carriage (30;30') on which the suspended load (2) is fixed is guided by a guide rail (40) attached to the tower (4) of the wind turbine generation apparatus (1) to move upward and downward along the tower (4) .

12. The suspended load lifting and lowering method for a wind turbine generation apparatus (1) according to claim 11, further comprising:
before the step of fixing the suspended load (2), lifting the suspended load carriage (30;30') and a drive carriage (50) including a driving source along the tower (4) by the driving source to an upper portion of the tower (4) in a state where the drive carriage (50) is coupled to the suspended load carriage (30;30'); and
separating the suspended load carriage (30;30') from the drive carriage (50).

13. The suspended load lifting and lowering method for a wind turbine generation apparatus (1) according to claim 12, wherein
the step of fixing the suspended load (2) includes:
loading the suspended load (2) in a nacelle (6) of the wind turbine generation apparatus (1) onto the suspended load carriage (30;30') in a state where the suspended load carriage (30;30') has been lifted to the upper portion of the tower (4); and
fixing the suspended load (2) to the suspended load carriage (30;30'), wherein
the step of lifting and lowering the suspended load (2) includes, after the step of separating the suspended load carriage (30;30'), lowering the suspended load carriage (30;30') together with the suspended load (2) from the upper portion of the tower (4) to a lower portion of the tower (4) by the lifting and lowering mechanism (20).

14. The suspended load lifting and lowering method for a wind turbine generation apparatus (1) according to claim 12 or 13, further comprising:
fixing a wire (22) of a winch (24) of the lifting and lowering mechanism (20) to the suspended load carriage (30;30');
after the steps of fixing the wire (22) and separating the suspended load carriage (30;30'), feeding the wire (22) from the winch (24) so that the suspended load carriage (30;30') is lowered together with the wire (22) to the lower portion of the tower (4), with the suspended load carriage (30;30') being guided to move along the tower (4) by the guide rail (40); and
after the step of feeding the wire (22), separating the wire (22) from the suspended load carriage (30;30') and then attaching the wire (22) to the suspended load (2) at the lower portion of the tower (4), wherein
the step of fixing of the suspended load (2) includes loading the suspended load (2) at the lower portion of the tower (4) onto the suspended load carriage (30;30'), and fixing the suspended load (2) to the suspended load carriage (30;30'), and
the step of lifting and lowering the suspended load (2) includes, after the steps of attaching the wire (22) and fixing the suspended load (2), lifting the suspended load carriage (30;30') together with the suspended load (2) by the lifting and lowering mechanism (20) to the upper portion of the tower (4).

15. The suspended load lifting and lowering method for a wind turbine generation apparatus (1) according to any one of claims 11 to 14, wherein
the lifting and lowering mechanism (20) includes:
a/the wire (22) connected to the suspended load (2); and
a/the winch (24) winding the wire (22),
the method further comprising changing a wire angle (α) between a vertical direction (Lv) and a portion of the wire (22) on a side of a connection end (22a) connected with the suspended load (2).

## Patentansprüche

1. Eine Hub- und Absenkvorrichtung für hängende Lasten (100) für eine Windturbinen-Stromerzeugungsvorrichtung (1), die einen Turm (4) aufweist, wobei die Vorrichtung (100) umfasst:
einen Hub- und Absenkmechanismus (20), der konfiguriert ist, um eine hängende Last (2) anzuheben und abzusenken,
einen Schlitten für eine hängende Last (30;30'), an dem die durch den Hub- und Absenkmechanismus (20) aufgehängte hängende Last (2) befestigt werden kann, wobei der Schlitten für die hängende Last (30;30') konfiguriert ist, um entlang dem Turm (4) der Windturbinen-Stromerzeugungsvorrichtung (1) bewegbar zu sein, und
eine Führungsschiene (40), die an dem Turm (4) anbringbar ist, wobei die Führungsschiene (40) konfiguriert ist, um den Schlitten für die hängende Last (30, 30') in einer solchen Weise zu führen, dass der Schlitten für die hängende Last (30;30') sich entlang dem Turm (4) auf und ab bewegt, wobei
der Schlitten für die hängende Last (30;30') konfiguriert ist, um zusammen mit der hängenden Last (2) mittels dem Hub- und Absenkmechanismus (20) angehoben und abgesenkt zu werden, wenn die hängende Last (2) an dem Schlitten für die hängende Last (30;30') aufgehängt ist und die hängende Last (2) mittels einem Anbringen des Hub- und Absenkmechanismus (20) an der hängenden Last (2) angehoben und abgesenkt wird.

2. Die Hub- und Absenkvorrichtung für hängende Lasten (100) gemäß Anspruch 1, für eine Windturbinen-Stromerzeugungsvorrichtung (1), von der der Turm (4) eine Vielzahl von Turmabschnitten (4a) aufweist, die miteinander gekoppelt sind, wobei
die Führungsschiene (40) konfiguriert ist, um angeordnet zu werden, während sie von einer Außenumfangsoberfläche des Turms (4) so getrennt ist, dass sie nicht in Kontakt mit einem Flanschabschnitt kommt, der ein Kopplungsabschnitt für die Turmabschnitte (4a) ist.

3. Die Hub- und Absenkvorrichtung für hängende Lasten (100) gemäß Anspruch 1 oder 2, wobei der Hub- und Absenkmechanismus (20) aufweist:
ein Kabel (22), das mit der hängenden Last (2) verbunden ist, und
eine Winde (24), die zum Aufwickeln des Kabels (22) konfiguriert ist.

4. Die Hub- und Absenkvorrichtung für hängende Lasten (100) gemäß Anspruch 3, wobei, wenn die hängende Last (2) und der Schlitten für die hängende Last (30;30') angehoben und abgesenkt werden, in einem angebrachten Zustand an der Windturbinen-Stromerzeugungsvorrichtung (1), das Kabel (22) zumindest an einer Seite eines Verbindungsendes (22a), das mit der hängenden Last (2) verbunden ist, und relativ zu einer vertikalen Richtung (Lv) geneigt ist, sodass ein Abstand des Kabels (22) von einer Mitte des Turms (4) in einer Abwärtsrichtung zunimmt.

5. Die Hub- und Absenkvorrichtung für hängende Lasten (100) gemäß Anspruch 3 oder 4, ferner mit einer Kabelwinkel-Einstelleinheit (70;70A;70B;70C) zum Verändern einer Kabelwinkels (a) zwischen einer vertikalen Richtung (Lv) und einem Abschnitt des Kabels (22) an einer Seite des Verbindungsendes (22a), das mit der hängenden Last (2) verbunden ist.

6. Die Hub- und Absenkvorrichtung für hängende Lasten (100) gemäß Anspruch 5, wobei
der Schlitten für die hängende Last (30;30') aufweist:
einen Schlittenhauptkörper (32), der konfiguriert ist, um durch die Führungsschiene (40) geführt zu werden, und
einen Plattformabschnitt (72), an dem die hängende Last (2) angeordnet werden kann, wobei der Plattformabschnitt (72) so an dem Schlittenhauptkörper (32) vorgesehen ist, dass er in einer Horizontalrichtung beweglich ist, und
die Kabelwinkel-Einstelleinheit (70;70A;70B;70C) konfiguriert ist, um den Plattformabschnitt (72) in der Horizontalrichtung zu bewegen.

7. Die Hub- und Absenkvorrichtung für hängende Lasten (100) gemäß Anspruch 5 oder 6, wobei, in einem angebrachten Zustand an der Windturbinen-Stromerzeugungsvorrichtung (1) die Kabelwinkel-Einstelleinheit (70;70A;70B;70C) konfiguriert ist, um einen Abschnitt des Kabels (22) über das Verbindungsende (22a) zu dem Turm (4) zu bewegen.

8. Die Hub- und Absenkvorrichtung für hängende Lasten (100) gemäß einem der Ansprüche 5 bis 7, wobei, in einem angebrachten Zustand an der Windturbinen-Stromerzeugungsvorrichtung (1), die Kabelwinkel-Einstelleinheit (70;70A;70B;70C) konfiguriert ist, um die Winde (24) in einer Richtung zu dem Turm (4) von dem Schlitten für die hängende Last (30;30') zu bewegen.

9. Die Hub- und Absenkvorrichtung für hängende Lasten (100) gemäß einem der Ansprüche 3 bis 8, wobei, in einem angebrachten Zustand an der Windturbinen-Stromerzeugungsvorrichtung (1), die Winde (24) in einer Gondel (6) der Windturbinen-Stromerzeugungsvorrichtung (1) oder in einem unteren Abschnitt des Turms (4) angeordnet ist.

10. Die Hub- und Absenkvorrichtung für hängende Lasten (100) gemäß einem der Ansprüche 1 bis 9, ferner mit:
einem Antriebsschlitten (50), der über dem Schlitten für die hängende Last (30;30') positioniert ist, wobei der Antriebsschlitten konfiguriert ist, um mit dem Schlitten für die hängende Last (30;30') zu koppeln, und
eine Antriebsquelle, die in dem Antriebsschlitten installiert ist, wobei die Antriebsquelle zum Antreiben des Antriebsschlittens (50) zur Bewegung nach oben und nach unten vorgesehen ist.

11. Ein Hub- und Absenkverfahren für eine Windturbinen-Stromerzeugungsvorrichtung (1), die einen Turm (4) aufweist, wobei das Verfahren umfasst:
Aufhängen einer aufgehängten Last (2) durch einen Hub- und Absenkmechanismus (20),
Befestigen der aufgehängten Last (2), die von dem Hub- und Absenkmechanismus (20) aufgehängt ist, an einem Schlitten für die aufgehängte Last (30;30'), und
Anheben und Absenken des Schlittens für die aufgehängte Last (30;30') zusammen mit der aufgehängten Last (2), die von dem Hub- und Absenkmechanismus (20) aufgehängt ist, mittels einer Befestigung des Hub- und Absenkmechanismus (20) an der aufgehängten Last (2) auf solche Weise, dass der Schlitten für die aufgehängte Last (30;30'), an dem die aufgehängte Last (2) befestigt ist, durch eine Führungsschiene (40), die an dem Turm (4) der Windturbinen-Stromerzeugungsvorrichtung (1) befestigt ist, zur Bewegung nach oben und unten entlang dem Turm (4) geführt wird.

12. Das Hub- und Absenkverfahren für hängende Lasten für eine Windturbinen-Stromerzeugungsvorrichtung (1) gemäß Anspruch 11, ferner mit:
vor dem Schritt des Befestigens der aufgehängten Last (2), Anheben des Schlittens für die aufgehängte Last (30;30') und eines Antriebsschlittens (50) mit einer Antriebsquelle entlang dem Turm (4) durch die Antriebsquelle zu einem oberen Abschnitt des Turms (4) in einem Zustand, wo der Antriebsschlitten (5) mit dem Schlitten für die aufgehängte Last (30;30') gekoppelt ist, und
Trennen des Schlittens für die aufgehängte Last (30;30') von dem Antriebsschlitten (50).

13. Das Hub- und Absenkverfahren für hängende Lasten für eine Windturbinen-Stromerzeugungsvorrichtung (1) gemäß Anspruch 12, wobei
der Schritt des Befestigens der hängenden Last (2) aufweist:
Laden der hängenden Last (2) in eine Gondel (6) der Windturbinen-Stromerzeugungsvorrichtung (1) auf den Schlitten für die hängende Last (30;30') in einem Zustand, wo der Schlitten für die hängende Last (30;30') zu dem oberen Abschnitt des Turms (4) angehoben worden ist, und
Befestigen der hängenden Last (2) an dem Schlitten für die hängende Last (30;30'), wobei
der Schritt des Anhebens und Absenkens der hängenden Last (2) nach dem Schritt des Trennens des Schlittens für die hängende Last (30;30') ein Absenken des Schlittens für die hängende Last (30;30') zusammen mit der hängenden Last (2) von dem oberen Abschnitt des Turms (4) zu einem unteren Abschnitt des Turms (4) durch den Hub- und Absenkmechanismus (20) aufweist.

14. Das Hub- und Absenkverfahren für hängende Lasten für eine Windturbinen-Stromerzeugungsvorrichtung (1) gemäß Anspruch 12 oder 13, ferner mit:
Befestigen eines Kabels (22) einer Winde (24) des Hub- und Absenkmechanismus (20) an dem Schlitten für die hängende Last (30;30'),
nach den Schritten des Befestigens des Kabels (22) und des Trennen des Schlittens für die hängende Last (30;30') Zuführen des Kabels (22) von der Winde (24) so, dass der Schlitten für die hängende Last (30;30') zusammen mit dem Kabel (22) zu dem unteren Abschnitt des Turms (4) abgesenkt wird, während der Schlitten für die hängende Last (30;30') zur Bewegung entlang dem Turm (4) durch die Führungsschiene (40) geführt wird, und
nach dem Schritt des Zuführens des Kabels (22), Trennen des Kabels (22) von dem Schlitten für die hängende Last (30;30') und dann Anbringen des Kabels (22) an der hängenden Last (2) an dem unteren Abschnitt des Turms (4), wobei
der Schritt des Befestigens der hängenden Last (2) ein Laden der hängenden Last (2) an dem unteren Abschnitt des Turms (4) auf den Schlitten für die hängende Last (30;30') und ein Befestigen der hängenden Last (2) an dem Schlitten für die hängende Last (30;30') aufweist, und
der Schritt des Anhebens- und Absenkens der hängenden Last (2) nach den Schritten des Anbringens des Kabels (22) und des Befestigens der hängenden Last (2) ein Anheben des Schlittens für die hängende Last (30;30') zusammen mit der hängenden Last (2) durch den Hub- und Absenkmechanismus (20) zu dem oberen Abschnitt des Turms (4) aufweist.

15. Das Hub- und Absenkverfahren für eine Windturbinen-Stromerzeugungsvorrichtung (1) gemäß einem der Ansprüche 11 bis 14, wobei
der Hub- und Absenkmechanismus (20) aufweist:
ein/das Kabel (22), das mit der hängenden Last (2) verbunden ist, und
eine/die Winde (24), die das Kabel (22) aufwickelt,
wobei das Verfahren ferner ein Verändern eines Kabelwinkels (a) zwischen einer vertikalen Richtung (Lv) und einem Abschnitt des Kabels (22) an einer Seite eines Verbindungsendes (22a), das mit der hängenden Last (2) verbunden ist, aufweist.

## Revendications

1. Dispositif (100) de levée et d'abaissement d'une charge suspendue pour une éolienne (1), qui comprend une tour (4),
le dispositif (100) comprenant :
un mécanisme (20) de levée et d'abaissement, configuré pour suspendre et pour lever et abaisser une charge (2) suspendue;
un chariot (30; 30') de charge suspendue, sur lequel la charge (2) suspendue par le mécanisme (20) de levée et d'abaissement peut être fixée, le chariot (30; 30') de charge suspendue étant configuré pour être mobile le long de la tour (4) de l'éolienne (1) et
un rail (40) de guidage pouvant être fixé à la tour (4), le rail (40) de guidage étant configuré pour guider le chariot (30; 30') de charge suspendue, de manière à ce que le chariot (30; 30') de charge suspendue monte et descende le long de la tour (4),
dans lequel
le chariot (30; 30') de charge suspendue est configuré pour être levé et abaissé, ensemble avec la charge (2) suspendue, au moyen du mécanisme (20) de levée et d'abaissement, lorsque la charge (2) suspendue est fixée au chariot (30; 30') de charge suspendue et lorsque la charge (2) suspendue est levée et abaissée au moyen de la fixation du mécanisme (20) de levée et d'abaissement à la charge (2) suspendue.

2. Dispositif (100) de levée et d'abaissement d'une charge suspendue suivant la revendication 1 pour une éolienne (1), dont la tour (4) comprend une pluralité de tronçons (4a) de tour reliés les uns aux autres, dans lequel
le rail (40) de guidage est configuré pour être disposé tout en étant séparé d'une surface circonférentielle extérieure de la tour (4), de façon à ne pas venir en contact avec une partie de rebord, qui est une partie de liaison des tronçons (4a) de tour.

3. Dispositif (100) de levée et d'abaissement d'une charge suspendue suivant la revendication 1 ou 2, dans lequel le mécanisme (20) de levée et d'abaissement comprend :
un câble (22) relié à la charge (2) suspendue et
un treuil (24), configuré pour enrouler le câble (22).

4. Dispositif (100) de levée et d'abaissement d'une charge suspendue suivant la revendication 3, dans lequel la charge (2) suspendue et le chariot (30; 30') de charge suspendue sont levés et abaissés dans un état monté de l'éolienne (1), le câble (22) étant incliné au moins d'un côté d'une extrémité (22a) de liaison relié à la charge (2) suspendue et par rapport à une direction (Lv) verticale, de manière à ce qu'une séparation du câble (22) d'un centre de la tour (4) augmente dans un sens vers le bas.

5. Dispositif (100) de levée et d'abaissement d'une charge suspendue suivant la revendication 3 ou 4, comprenant, en outre, une unité (70; 70A; 70B; 70C) de réglage de l'angle du câble pour modifier un angle (α) du câble entre une direction (Lv) verticale et une partie du câble (22) d'un côté de l'extrémité (22a) de liaison relié à la charge (2) suspendue.

6. Dispositif (100) de levée et d'abaissement d'une charge suspendue suivant la revendication 5, dans lequel
le chariot (30; 30') de charge suspendue comprend :
un corps (32) principal de chariot, configuré pour être guidé par le rail (40) de guidage et
une partie (72) de plateforme sur laquelle la charge (2) suspendue peut être placée, la partie (72) de plateforme étant prévue sur le corps (32) principal du chariot, de manière à être mobile dans une direction horizontale et
l'unité (70; 70A; 70B; 70C) de réglage de l'angle du câble est configurée pour déplacer la partie (72) de plateforme dans la direction horizontale.

7. Dispositif (100) de levée et d'abaissement d'une charge suspendue suivant la revendication 5 ou 6, dans lequel, à l'état monté sur l'éolienne (1), l'unité (70; 70A; 70B; 70C) de réglage de l'angle du câble est configurée pour déplacer une partie du câble (22) au-dessus de l'extrémité (22A) de liaison vers la tour (4).

8. Dispositif (100) de levée et d'abaissement d'une charge suspendue suivant l'une quelconque des revendications 5 à 7, dans lequel, à l'état monté sur l'éolienne (1), l'unité (70; 70A; 70B; 70C) de réglage à l'angle du câble est configurée pour déplacer le treuil (24) dans une direction vers la tour (4) à partir du chariot (30; 30') de charge suspendue.

9. Dispositif (100) de levée et d'abaissement d'une charge suspendue suivant l'une quelconque des revendications 3 à 8, dans lequel, à l'état monté sur l'éolienne (1), le treuil (24) est disposé dans une nacelle (6) de l'éolienne (1) ou dans une partie inférieure de la tour (4).

10. Dispositif (100) de levée et d'abaissement d'une charge suspendue suivant l'une quelconque des revendications 1 à 9, comprenant, en outre :
un chariot (50) d'entraînement, placé au-dessus du chariot (30; 30') de charge suspendue, le chariot d'entraînement étant configuré pour être apte à se relier au chariot (30; 30') de charge suspendue et
une source d'entraînement, montée dans le chariot d'entraînement, la source d'entraînement étant prévue pour entraîner le chariot (50) d'entraînement, afin qu'il se déplace vers le haut et vers le bas.

11. Procédé de levée et d'abaissement d'une charge suspendue pour une éolienne (20), qui comprend une tour (4),
le procédé comprenant :
suspendre une charge (2) suspendue par un mécanisme (20) de levée et d'abaissement;
fixer la charge (2) suspendue par le mécanisme (20) de levée et d'abaissement à un chariot (30; 30') de charge suspendue et
lever et abaisser le chariot (30; 30') de charge suspendue, ensemble avec la charge (2) suspendue, qui est suspendue par le mécanisme (20) de levier et d'abaissement au moyen d'une fixation du mécanisme (20) de levée et d'abaissement à la charge suspendue, de manière à ce que le chariot (30; 30') de charge suspendue, sur lequel la charge (2) suspendue est fixée, soit guidé par un rail (40) de guidage fixé à la tour (4) de l'éolienne (1), afin de monter et de descendre le long de la tour (4).

12. Procédé de levée et d'abaissement d'une charge suspendue pour une éolienne (1) suivant la revendication 11,
comprenant, en outre :
avant le stade de fixation de la charge (2) suspendue, lever le chariot (30; 30') de charge suspendue et un chariot (50) d'entraînement, comprenant une source d'entraînement le long de la tour (4) par la source d'entraînement jusqu'à une partie supérieure de la tour (4) dans un état où le chariot (50) d'entraînement est relié au chariot (30; 30') de charge suspendue et
séparer le chariot (30, 30') de charge suspendue du chariot (50) d'entraînement.

13. Procédé de levée et d'abaissement d'une charge suspendue pour une éolienne (1) suivant la revendication 12,
dans lequel
le stade de fixation de la charge (2) suspendue comprend :
charger la charge (2) suspendue dans une nacelle (6) de l'éolienne (1) sur le chariot (30; 30') de charge suspendue, dans un état où le chariot (30; 30') de charge suspendue a été levé jusqu'à la partie supérieure de la tour (4) et
fixer la charge (2) suspendue au chariot (30; 30') de charge suspendue, dans lequel
le stade de levée et d'abaissement de la charge (2) suspendue comprend, après le stade de séparation du chariot (30; 30') de charge suspendue, abaisser le chariot(30; 30') de charge suspendue ensemble avec la charge (2) suspendue de la partie supérieure de la tour (4) à une partie inférieure de la tour (4) par le mécanisme (1) de levée et d'abaissement.

14. Procédé de levée et d'abaissement d'une charge suspendue pour une éolienne (1) suivant la revendication 12 ou 13, comprenant, en outre :
fixer un câble (22) d'un treuil (24) du mécanisme (20) de levée et d'abaissement au chariot (30; 30') de charge suspendue,
après les stades de fixation du câble (22) et de séparation du chariot (30; 30') de charge suspendue, donner du câble (22) par le treuil (24), de manière à ce que le chariot (30; 30') de charge suspendue soit abaissé ensemble avec le câble (22) jusqu'à la partie inférieure de la tour (24), le chariot (30; 30') de charge suspendue étant guidé pour se déplacer le long de la tour (4) par le rail (40) de guidage et
après le stade dans lequel on donne le câble (22), séparer le câble (22) du chariot (30; 30') de charge suspendue, puis fixer le câble (22) à la charge (2) suspendue à la partie inférieure de la tour (4), dans lequel
le stade de fixation de la charge (2) suspendue comprend, charger la charge (2) suspendue à la partie inférieure de la tour (4) sur le chariot (30; 30') de charge suspendue et fixer la charge (2) suspendue au chariot (30; 30') de charge suspendue et
le stade de levée et d'abaissement de la charge (2) suspendue comprend, après les stades de fixation du câble (22) et de fixation de la charge (2) suspendue, lever le chariot (30; 30') de charge suspendue, ensemble avec la charge (2) suspendue, par le mécanisme (20) de levée et d'abaissement jusqu'à la partie supérieure de la tour (4).

15. Procédé de levée et d'abaissement d'une charge suspendue pour une éolienne (1) suivant l'une quelconque des revendications 1 à 14, dans lequel
le mécanisme (20) de levée et d'abaissement comprend :
un/le câble (22) relié à la charge (2) suspendue et
un/le treuil (24), enroulant le câble (22),
le procédé comprenant, en outre, modifier un angle (α) du câble entre une direction (Lv) verticale et une partie du câble (22) d'un côté d'une extrémité (22a) de liaison reliée à la charge (2) suspendue.
